# EUROPÄISCHE PATENTSCHRIFT

(11) **EP 3 586 018 B1**
(45) Veröffentlichungstag und Bekanntmachung des Hinweises auf die Patenterteilung: **30.03.2022**
(21) Anmeldenummer: 18707331.7
(22) Anmeldetag: 21.02.2018
(51) Int. Cl.: F16B 37/04, F16B 7/18

(54) **BEFESTIGUNGSVORRICHTUNG UND BEFESTIGUNGSBAUGRUPPE**
FASTENING DEVICE AND FASTENING ASSEMBLY
DISPOSITIF DE FIXATION ET MODULE DE FIXATION

(30) Priorität: 23.02.2017 DE 102017103772
(43) Veröffentlichungstag der Anmeldung: 01.01.2020
(73) Patentinhaber: MÜPRO Services GmbH, 65719 Hofheim am Taunus (DE)
(72) Erfinder: SCHEINBERGER, Marcus, 65719 Hofheim (DE); ALT, Janosch, 65207 Wiesbaden (DE); EPING, Udo, 64297 Darmstadt (DE)
(74) Vertreter: Boult Wade Tennant LLP
(86) Internationale Anmeldenummer: PCT/EP2018/054302
(87) Internationale Veröffentlichungsnummer: WO 2018/153931

(56) Entgegenhaltungen:
- EP-A2- 1 039 155
- DE-A1-102015 118 314

## Beschreibung

Die Erfindung betrifft eine Befestigungsvorrichtung gemäß dem Oberbegriff von Anspruch 1 sowie eine Befestigungsbaugruppe mit einer solchen Befestigungsvorrichtung.

Befestigungsvorrichtungen dieser Art werden verwendet, um Anbauteile an Profilschienen zu befestigen. Das Anbauteil kann beispielsweise ein Winkelblech sein, an dem eine weitere Profilschiene befestigt wird. Das Anbauteil kann aber auch eine Last tragen oder Teil dieser Last sein. Das Anbauteil hat eine Öffnung, deren Abmessung so gewählt ist, dass die Haltevorrichtung mit der Gewindeplatte in zumindest einer Ausrichtung so von einer Vorderseite in die Öffnung eingeschoben werden kann, dass die Gewindeplatte auf der Rückseite des Anbauteils aus der Öffnung herausragen kann. Die Deckplatte und der Halteflansch sind derart bemessen, dass diese auf der Vorderseite des Anbauteils aufliegen können.

In einer Vormontagestellung drückt die Feder die Deckplatte und die Halteeinrichtung mit der in der Aufnahme gehaltenen Gewindeplatte auseinander. Die Gewindeplatte wird durch die Gewindestange gehalten, deren Kopf auf der Deckplatte aufliegt. Der maximale Abstand der Gewindeplatte von der Deckplatte ist somit durch die Gewindestange definiert. Die Haltevorrichtung und die Gewindestange können gegen die Federspannung soweit gegen die Deckplatte bewegt werden, bis die Haltevorrichtung an der Deckplatte anliegt.

Zur Befestigung der Last wird die Befestigungsvorrichtung so in die Öffnung des Anbauteils eingesetzt, dass die Haltevorrichtung durch die Öffnung ragt und der Halteflansch auf der Vorderseite des Anbauteils bzw. am Rand der Öffnung aufliegt. Die Gewindeplatte befindet sich in der Öffnung oder auf der Rückseite des Anbauteils. Durch Druck auf die Deckplatte kann diese gegen die Vorderseite des Anbauteils gedrängt werden, wodurch die Gewindeplatte über die Gewindestange weiter in die Öffnung bzw. eine Profilschiene, auf der das Anbauteil aufliegt, hinein bewegt wird.

Anschließend kann die Befestigungsvorrichtung so gedreht werden, dass die Gewindeplatte die Schlitzflanken der Profilschiene hintergreift, wodurch die Befestigungsvorrichtung und das Anbauteil an der Profilschiene vorfixiert sind. Durch die Feder wird die Deckplatte von der Haltevorrichtung und dem auf der Vorderseite aufliegenden Halteflansch weggedrängt, und die über die Gewindestange mit der Deckplatte gekoppelte Gewindeplatte gegen die Schlitzflanken gezogen. Dadurch erfolgt eine spielfreie Vorfixierung, indem das Anbauteil und die Schlitzflanken zwischen dem Flansch und der Gewindeplatte geklemmt werden. Durch Drehen der Gewindestange wird die Gewindeplatte gegen die Deckplatte und somit die Deckplatte gegen die Vorderseite des Anbauteils gezogen bis die Schlitzflanken zwischen der Deckplatte und der Gewindeplatte geklemmt sind.

Solche Befestigungsvorrichtung sind beispielswiese in der DE10 2015 118314 A1, der EP 2 218 924 A2 oder der EP 1 039 155 A2 gezeigt. In der EP 1 039 155 A2 ist des Weiteren eine rohrförmige Verlängerung vorgesehen, die drehstarr mit der Deckplatte verbunden ist und in der die Haltevorrichtung axialverschieblich und drehstarr gehalten ist, so dass die Haltevorrichtung und die Verlängerung quasi ein Teleskoprohr bilden und zwischen sich die Feder aufnehmen. Die Befestigungsvorrichtung weist aber sehr viele Einzelteile auf, so dass der Zusammenbau der Befestigungsvorrichtung sehr aufwändig ist.

Aufgabe der Erfindung ist es, eine Befestigungsvorrichtung der eingangs genannten Art sowie eine Befestigungsbaugruppe mit einer solchen Befestigungsvorrichtung bereitzustellen, die einen einfacheren Aufbau aufweisen und einfach zu montieren sind.

Hauptmerkmale der Erfindung sind in den kennzeichnenden Teilen der Ansprüche 1 und 12 angegeben. Ausgestaltungen sind Gegenstand der Ansprüche 2 bis 11 sowie 13. Zur Lösung der Aufgabe ist eine Befestigungsvorrichtung zur Befestigung eines Anbauteils an einer Profilschiene vorgesehen mit einem im Wesentlichen C-förmigen Querschnitt und einem Längsschlitz, wobei die Befestigungsvorrichtung eine Deckplatte, eine Gewindeplatte mit einer Gewindebohrung, eine Haltevorrichtung mit einer Aufnahme für die Gewindeplatte und einem radial abstehenden Halteflansch zur Abstützung an dem Anbauteil, wobei die Haltevorrichtung drehstarr mit der Deckplatte und der Gewindeplatte gekoppelt ist, eine zwischen der Deckplatte und der Haltevorrichtung angeordnete Feder und eine Gewindestange aufweist, die mit einem Außengewinde in die Gewindebohrung eingreift und sich an der Deckplatte abstützt. An der Deckplatte sind in Richtung zur Gewindeplatte vorstehende Führungsvorsprünge vorgesehen, die in korrespondierende Führungsausnehmungen in der Haltevorrichtung drehstarr und axial verschieblich eingreifen.

Des Weiteren stützt sich die Feder unmittelbar an der Deckplatte ab.

Die Haltevorrichtung weist durch diesen Aufbau weniger Bauteile auf. Dabei rückt die erfindungsgemäße Befestigungsvorrichtung von der bisher plattenförmigen Ausbildung der Deckplatte ab. Es hat sich nämlich gezeigt, dass es möglich ist, die Führungsvorsprünge in hinreichender Länge an der Deckplatte auszubilden, um den beim Eindrehen der Befestigungsvorrichtung in einer Vorverankerungsstellung in der Profilschiene erforderlichen axialen Federweg zur Verfügung zu stellen, ohne dass diese Vorsprünge den Eindrehvorgang durch Kollision mit anderen Elementen, d.h. dem Anbauteil oder der Führungsschiene, behindern. Somit ist im Ergebnis die Herstellung günstiger und der Zusammenbau der Befestigungsbaugruppe deutlich vereinfacht.

Die Haltevorrichtung kann einen zylinderförmigen, sich im Wesentlichen in Längsrichtung der Gewindestange erstreckenden Halteabschnitt aufweisen, wobei die Führungsausnehmungen im Halteabschnitt vorgesehen sind. Durch die axiale Länge der Führungsausnehmungen sowie die axiale Länge der Führungsvorsprünge kann die Länge des Verschiebeweges der Deckplatte und der Haltevorrichtung in axialer Richtung relativ zueinander festgelegt werden. Durch längere Führungsvorsprünge bzw. Führungsausnehmungen kann beispielsweise ein längerer Verschiebeweg bereitgestellt werden.

Beispielsweise sind die Führungsausnehmungen durch einen im Wesentlichen in Längsrichtung der Gewindestange verlaufenden Schlitz im Halteabschnitt gebildet, so dass durch die Führungsausnehmungen und die in diesen geführten Führungsvorsprüngen eine drehstarre und axialverschiebliche Lagerung der Deckplatte und der Haltevorrichtung bereitgestellt ist. Der Schlitz kann sich beispielsweise von der der Deckplatte zugewandten Stirnseite des Halteabschnitts in axialer Richtung in den Halteabschnitt erstrecken, so dass der Schlitz zur Deckplatte hin offen ist.

Die Führungsvorsprünge können von der Stirnseite in axialer Richtung in den Schlitz eingeführt werden, so dass eine einfache, drehstarre und axialverschiebliche Lagerung bereitgestellt ist. Vorzugsweise ist die Feder innerhalb des Halteabschnitts angeordnet und somit in dieser in axialer Richtung geführt. Des Weiteren ist die Feder innerhalb des Halteabschnitts vor mechanischer Belastung oder Verschmutzung geschützt.

Die Feder kann beispielsweise an den Führungsvorsprüngen an der Deckplatte anliegen. Die Führungsvorsprünge ragen in Richtung zur Haltevorrichtung vor bzw. tauchen in die Führungsausnehmungen an der Haltevorrichtung ein. Somit befindet sich das an der Deckplatte abgestützte Ende der Feder innerhalb der Haltevorrichtung. Da sich das entgegengesetzte, an der Haltevorrichtung abgestützte Ende der Feder ebenfalls in der Haltevorrichtung befindet, befindet sich die Feder vollständig innerhalb der Haltevorrichtung bzw. ist in dieser geführt.

Der Halteflansch weist beispielsweise zumindest einen Drehanschlag zur Anlage am Rand einer Öffnung des Anbauteils sowie eine Ausdrehschräge zum Ausdrehen des Drehanschlages aus der Öffnung des Anbauteils auf. Die Befestigungsvorrichtung kann üblicherweise in einer ersten Ausrichtung mit der Gewindeplatte in die Profilschiene eingeführt und anschließend so gedreht werden, dass die Gewindeplatte die Schlitzflanken hintergreift. Beispielsweise wird die Befestigungsvorrichtung dazu um ca. 90° gedreht, wobei der Drehwinkel in Abhängigkeit von der Form der Gewindeplatte variieren kann. Das Anbauteil wird dabei nicht mitgedreht, sondern verbleibt in einer gewünschten Position. Der Drehanschlag ist so ausgebildet, dass der Drehanschlag am Rand der Öffnung des Anbauteils anliegt und ein weiteres Drehen der Befestigungsvorrichtung verhindert, wenn die Gewindeplatte um den erforderlichen Drehwinkel gedreht ist. Der Drehanschlag kann bereits vor dem Drehen der Befestigungsvorrichtung in die Öffnung des Anbauteils ragen. Es ist aber auch möglich, dass der Drehanschlag erst durch das Drehen der Befestigungsvorrichtung in die Öffnung gelangt. Die Ausdrehschräge ist derart ausgebildet, dass bei einem Drehen der Befestigungsvorrichtung in die entgegengesetzte Richtung der in die Öffnung ragende Drehanschlag aus der Öffnung heraus bewegt wird, so dass ein Lösen der Befestigungsvorrichtung möglich ist.

Die Deckplatte kann eine Vertiefung aufweisen, in der der Halteflansch so aufgenommen werden kann, dass dieser nicht über die der Gewindeplatte zugewandten Unterseite der Deckplatte vorsteht. Der Halteflansch bzw. die Haltevorrichtung haben lediglich die Funktion, die Gewindeplatte während der Montage der Befestigungsvorrichtung in einer Vormontagestellung an der Profilschiene zu halten. Ist die Befestigungsvorrichtung montiert, erfolgt die Klemmung über die Deckplatte, die Gewindestange und die Gewindeplatte. Würde der Halteflansch über die Deckplatte vorstehen, könnte dieser zwischen der Deckplatte und dem Anbauteil geklemmt werden. Da die Haltevorrichtung beispielsweise aus Kunststoff gefertigt ist, könnten es zu alterungsbedingten Setzungen des Kunststoffes kommen, durch die die Klemmkraft der Befestigungsvorrichtung reduzieren könnten. Auch im Brandfall wäre unter Umständen eine ordnungsgemäße Fixierung nicht mehr gewährleistet. Eine Haltevorrichtung aus einem stabileren Material, beispielsweise aus Metall, würde aber das Gewicht der Befestigungsvorrichtung erhöhen und zu höheren Herstellungskosten führen. Durch die Vertiefung kann der Halteflansch derart in die Deckplatte eintauchen, dass sich der Halteflansch nicht im Kraftfluss zwischen der Deckplatte und dem Anbauteil befindet. Die Haltekraft ist somit unabhängig von der Materialwahl der Haltevorrichtung. Die Haltevorrichtung kann somit aus einem leichteren Material, vorzugsweise Kunststoff hergestellt werden.

Um ein Mitdrehen der Deckplatte und somit der Befestigungsvorrichtung beim Eindrehen der Gewindestange in die Gewindeplatte oder ein Drehen der montierten Befestigungsvorrichtung, das zu einem Lösen der Gewindeplatte in der Gewindestange führen könnte, zu verhindern, ist an der Deckplatte zumindest ein in Richtung zur Gewindeplatte vorstehender Anschlag zur drehfesten Lagerung der Deckplatte an einer Öffnung des Anbauteils vorgesehen. Die Deckplatte kann während der Montage der Befestigungsvorrichtung manuell gegen das Anbauteil gedrückt werden, so dass der Anschlag in die Öffnung eintaucht und ein Mitdrehen der Befestigungsvorrichtung verhindert. Sobald die Gewindeplatte und die Deckplatte gegeneinander verspannt werden, taucht der Anschlag dauerhaft in die Öffnung ein, so dass bei montierter Befestigungsvorrichtung eine drehfeste Fixierung am Anbauteil erfolgt.

Gemäß der Erfindung sind mehrere Führungsvorsprünge und mehrere korrespondierende Führungsausnehmungen vorgesehen, die vorzugsweise um die Gewindestange verteilt, insbesondere gleichmäßig verteilt, angeordnet sind, wodurch eine bessere Lagerung der Deckplatte an der Haltevorrichtung erzielt werden kann. Insbesondere kann die Gefahr eines Kippens der Deckplatte oder eines Verkantens der Führungsvorsprünge in den Führungsausnehmungen reduziert werden.

Am der Deckplatte entgegengesetzten Ende der Haltevorrichtung ist beispielsweise ein Halteschlitz für die Gewindeplatte vorgesehen, so dass die Gewindeplatte in axialer Richtung in die Haltevorrichtung eingesetzt werden kann. Der Halteschlitz bildet zudem eine Führung, die ein axiales Verschieben der Gewindeplatte ermöglicht.

Die Aufnahme für die Gewindeplatte kann einen Anschlag für die Deckplatte aufweisen, der den minimalen Abstand zwischen der Gewindeplatte und dem Halteflansch festlegt.

Zur Lösung der Aufgabe ist des Weiteren eine Baugruppe mit einer Befestigungsvorrichtung nach einem der vorhergehenden Ansprüche und mit einem Anbauteil vorgesehen, das eine Öffnung aufweist, durch die sich die Haltevorrichtung erstreckt, wobei der Flansch der Haltevorrichtung auf dem Anbauteil aufliegt und das Anbauteil zur Auflage auf der Profilschiene seitlich neben dem Längsschlitz bestimmt ist.

Am Halteflansch ist vorzugsweise ein Drehanschlag zum Eingriff in die Öffnung des Anbauteils sowie eine Ausdrehschräge zum Ausdrehen des Drehanschlages aus der Öffnung des Anbauteils vorgesehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Explosionsansicht einer Befestigungsvorrichtung;
- Fig. 2: eine Detailansicht der Deckplatte der Befestigungsvorrichtung aus Fig. 1;
- Fig. 3: eine erste Schnittansicht durch eine Befestigungsbaugruppe mit der Befestigungsvorrichtung aus Fig. 1 an einer Profilschiene in einer Zwischenmontageposition; und
- Fig. 4: eine weitere Schnittansicht durch eine Befestigungsbaugruppe mit der Befestigungsvorrichtung aus Fig. 1 an einer Profilschiene in einer Vormontageposition.

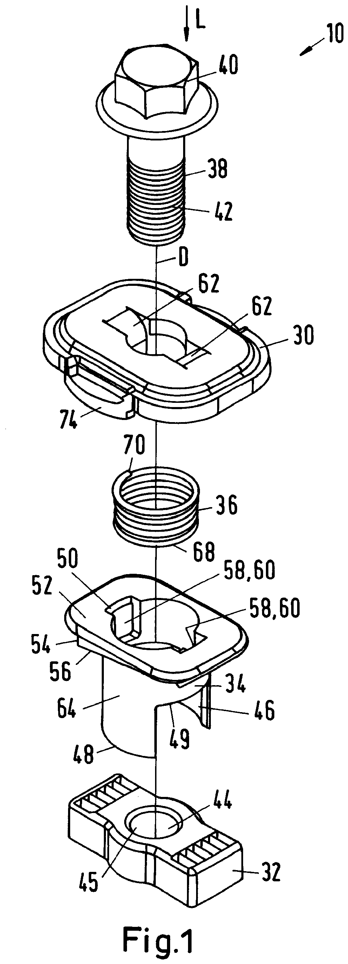

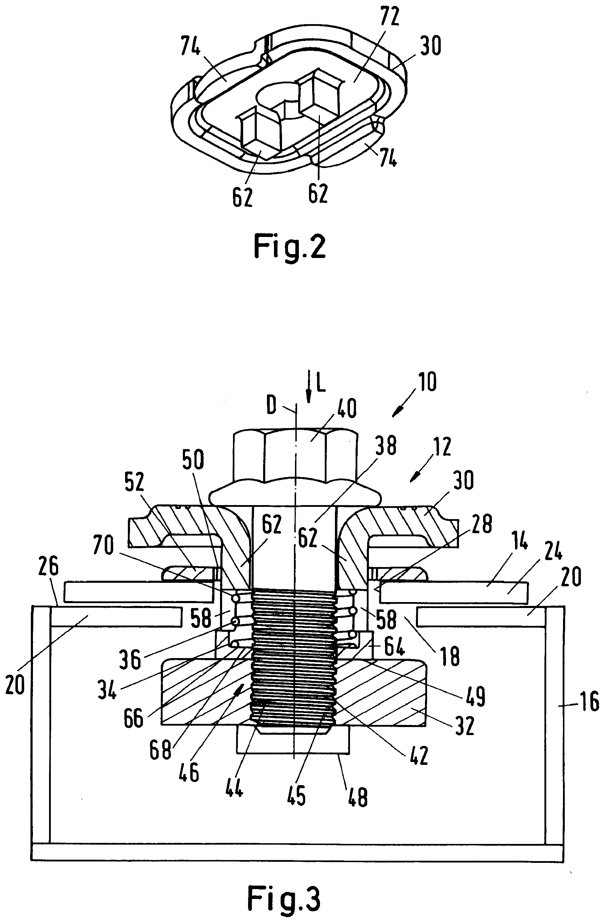

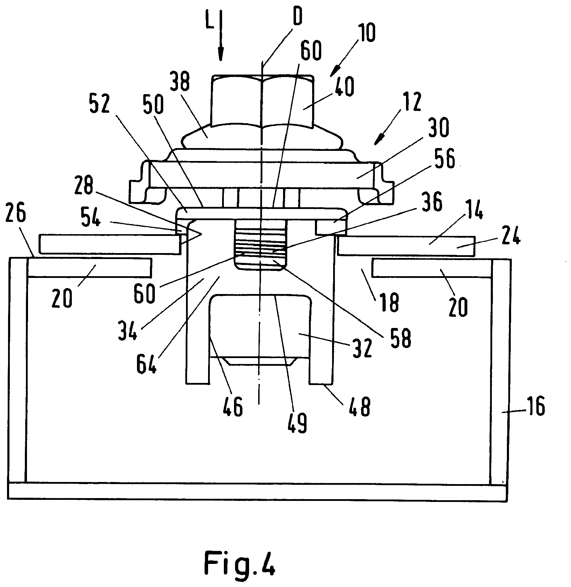

In Figur 1 ist eine Befestigungsvorrichtung 10 für eine in den Figuren 3 und 4 gezeigte Befestigungsbaugruppe 12 gezeigt. Die Befestigungsbaugruppe 12 hat neben der Befestigungsvorrichtung 10 ein Anbauteil 14, das mit der Befestigungsvorrichtung 10 an einer Profilschiene 16 fixiert werden kann.

Die Profilschiene 16 hat einen im Wesentlichen C-förmigen Querschnitt und einen Längsschlitz 18, der von zwei im Wesentlichen parallelen Schlitzflanken 20 begrenzt wird. Hinter den Schlitzflanken 20 ist ein Aufnahmeraum 22 vorgesehen.

Das Anbauteil 14 weist einen Auflageplatte 24 zur Auflage auf der Vorderseite 26 der Profilschiene 16 auf. Die Auflageplatte 24 hat eine Öffnung 28, durch die sich, wie nachfolgend im Detail erläutert wird, die Befestigungsvorrichtung 10 erstrecken kann.

Die Befestigungsvorrichtung 10 hat eine Deckplatte 30, eine Gewindeplatte 32, eine Haltevorrichtung 34 für die Gewindeplatte 32, eine Feder 36 sowie eine Gewindestange 38.

Die Deckplatte 30 ist so ausgebildet, dass diese auf der Vorderseite des Anbauteils 14 bzw. der Auflageplatte 24 des Anbauteils 14 aufliegen kann. Die Breite der Gewindeplatte 32 ist kleiner als die Breite des Längsschlitzes 18, die Länge der Gewindeplatte 32 ist größer als die Breite des Längsschlitzes. Die Gewindestange 38 weist einen Kopf 40 auf, der sich an der Vorderseite der Deckplatte 30 abstützt, sowie ein Außengewinde 42, das in ein Innengewinde 44, das in einer Gewindebohrung 45 der Gewindeplatte 32 vorgesehen ist, eingreift. Durch Eindrehen der Gewindestange 38 in die Gewindeplatte 32 wird die Deckplatte 30 gegen die Gewindeplatte 32 gezogen.

Zum Fixieren des Anbauteils wird die Deckplatte 30 auf die Vorderseite des Anbauteils 14 bzw. der Auflageplatte 24 des Anbauteils 14 so aufgelegt, dass die Gewindeplatte 32 durch die Öffnung 28 geführt wird und in den Längsschlitz 18 bzw. den Aufnahmeraum 22 ragt.

Die Länge der Öffnung 28 ist größer als die Länge der Gewindeplatte 32. Die Breite der Öffnung 28 ist größer als die Breite der Gewindeplatte 32. Zum Einschieben der Befestigungsvorrichtung 10 ist die Öffnung 28 so ausgerichtet, dass die Öffnung 28 sich in Längsrichtung der Profilschiene erstreckt, so dass die Gewindeplatte 32 sowohl durch die Öffnung 28 wie auch durch den Längsschlitz geführt werden kann.

Anschließend wird die Gewindeplatte 32 derart in einer Eindrehrichtung gedreht, dass diese die Schlitzflanken 20 hintergreift. Durch Drehen der Gewindestange 38 wird die Gewindeplatte 32 gegen die Deckplatte 30 und somit das Anbauteil 14 gegen die Profilschiene 16 verspannt, so dass das Anbauteil 14 an der Profilschiene 16 fixiert ist.

Die Deckplatte 30 und die Gewindeplatte 32 sind über die Haltevorrichtung 34 bezüglich einer durch die Längsachse der Gewindestange 38 definierten Drehachse D drehstarr miteinander verbunden. Bei einem Drehen der Deckplatte 30 dreht sich also die in die Profilschiene 16 eingeführte Gewindeplatte 32 mit der Deckplatte 30 mit und kann so die Schlitzflanken 20 hintergreifen. Des Weiteren ist die Gewindeplatte 32 über die Haltevorrichtung 34 in Längsrichtung L der Gewindestange 38 begrenzt verschiebbar zur Deckplatte 30 gehalten.

Die Haltevorrichtung 34 weist dazu eine Aufnahme 46 für die Gewindeplatte 32 auf, in der die Gewindeplatte 32 parallel und beabstandet von der Deckplatte 30 gehalten ist. Die Aufnahme 46 ist hier durch einen Halteschlitz auf dem der Deckplatte abgewandten Ende 48 der Haltevorrichtung 34 gebildet. Der Halteschlitz bildet eine Lagerung für die Gewindeplatte 32, in der die Gewindeplatte drehstarr und in Längsrichtung L verschiebbar gehalten ist. Zur Deckplatte hin ist der Halteschlitz durch einen Anschlag 49 begrenzt, durch den der minimale Abstand der Gewindeplatte 32 von der Deckplatte 30 bzw. dem der Deckplatte zugewandten Ende 50 der Haltevorrichtung 34 definiert ist.

Am der Deckplatte zugewandten Ende 50 der Haltevorrichtung 34 ist ein radial abstehender Halteflansch 52 vorgesehen. Die Breite und die Länge des Halteflansches 52 sind größer als die Breite der Öffnung 28 des Anbauteils 14. Insgesamt ist der Halteflansch 52 so ausgebildet, dass dieser auf der Vorderseite des Anbauteils 14 aufliegen, aber nicht in die Öffnung 28 eintauchen kann. Auf der dem Anbauteil 14 zugewandten Unterseite des Halteflansches 52 sind zwei jeweils radial gegenüberliegende Drehanschläge 54 und Ausdrehschrägen 56 vorgesehen.

Des Weiteren sind zwei radial gegenüberliegende Führungsausnehmungen 58 vorgesehen, die jeweils durch einen sich von der der Deckplatte 30 zugewandten Stirnfläche bzw. vom Ende 50 in Längsrichtung L in die Haltevorrichtung 34 erstreckenden Schlitz 60 gebildet sind.

An der Deckplatte 30 sind zu den Führungsausnehmungen 58 korrespondierende Führungsvorsprünge 62 vorgesehen, die, wie insbesondere in Figur 3 zu sehen sind, in Längsrichtung L in die Führungsausnehmungen 58 eintauchen, so dass die Deckplatte 30 und die Haltevorrichtung 34 drehstarr und in Längsrichtung L bewegbar miteinander verbunden sind. Die Führungsvorsprünge 62 sind jeweils durch zur Gewindeplatte 32 umgebogene Abschnitte der Deckplatte 30 gebildet.

Die Haltevorrichtung 34 weist des Weiteren zwischen dem Halteflansch 52 und der Aufnahme 46 für die Gewindeplatte 32 einen sich im Wesentlichen in Längsrichtung L erstreckenden zylinderförmigen Halteabschnitt 64 auf. Die Führungsausnehmungen 58 erstrecken sich ausgehend von der der Deckplatte 30 zugewandten Stirnfläche in den Halteabschnitt 64 bzw. die Außenwand des Halteabschnitts 64, d. h. die Außenwand des Halteabschnitts 64 ist durch die Schlitze 60 unterbrochen.

Die Feder 36 ist innerhalb des Halteabschnitts 64 vorgesehen und stützt sich mit einem Ende 68 an einem Boden 66 im zylinderförmigen Halteabschnitt 34 ab. Das zweite Ende 70 der Feder 36 stützt sich unmittelbar an der Deckplatte 30 ab. Wie insbesondere in Figur 3 zu sehen ist, stützt sich die Feder 36 an den Führungsvorsprüngen 62 an der Deckplatte 30 ab.

Die Feder 36 drückt dadurch die Deckplatte 30 und die Haltevorrichtung 34 auseinander. Des Weiteren wird die Haltevorrichtung 34 gegen die Gewindeplatte 32 gedrückt, deren Abstand zur Deckplatte 30 durch die Gewindestange 38 festgelegt ist. Die Gewindeplatte 32 liegt dadurch am Anschlag 49 im Halteschlitz an.

Zur Befestigung des Anbauteils 14 an der Profilschiene 16 wird nun die Befestigungsvorrichtung 10 mit der Gewindeplatte 32 in die Öffnung 28 eingeschoben bis der Halteflansch 52 auf der Vorderseite des Anbauteils 14 aufliegt (Figur 4). Anschließend wird Druck auf die Deckplatte 30 ausgeübt, so dass diese entgegen der Federspannung der Feder 36 gegen den Halteflansch 52 bewegt wird. Wie insbesondere in Figur 3 zu sehen ist, weist die Deckplatte 30 eine Vertiefung 72 auf, in der der Halteflansch 52 so aufgenommen werden kann, dass dieser in Längsrichtung L nicht über die der Gewindeplatte 32 zugewandten Unterseite der Deckplatte 30 vorsteht. Die Deckplatte 30 kann also soweit gegen die Haltevorrichtung 34 bzw. den Halteflansch 52 bewegt werden, bis die Deckplatte 30 auf der Vorderseite des Anbauteils 14 aufliegt.

Die über die Gewindestange 38 mit der Deckplatte 30 gekoppelte Gewindeplatte 32 wird dadurch weiter in die Profilschiene 16 eingeschoben, so dass diese in Längsrichtung L hinter die Schlitzflanken 20 gelangt. Durch das Drehen in Eindrehrichtung gelangen die Drehanschläge 54, die auf der Vorderseite des Anbauteils 14 aufliegen (siehe Figur 4) in die Öffnung und bei einem weiteren Drehen mit dem Rand der Öffnung 28 in Anlage, so dass diese ein weiteres Drehen der Befestigungsvorrichtung 10 verhindern (Figur 3). In der hier gezeigten Ausführungsform entspricht der maximale Drehwinkel ca. 90°. In Abhängigkeit von der Profilschiene 16, den Abmessungen der Gewindeplatte 32 und der Position der Drehanschläge 54 sind aber auch andere Drehwinkel möglich.

Wird anschließend der Druck auf die Deckplatte 30 reduziert, wird diese von der Feder 36 vom Halteflansch 52 weggedrückt, so dass die Gewindeplatte 32 gegen die Schlitzflanken 18 gedrückt wird. Die Feder 36 bewirkt somit eine Vorverspannung durch die der Halteflansch 52 und die Gewindeplatte 32 aufeinander zu gedrückt werden. Durch diese Vorspannung erfolgt eine Vorfixierung des Anbauteils 14 gegen die Profilschiene 16.

Anschließend kann durch Drehen der Gewindestange 38 die Deckplatte 30 gegen die Gewindeplatte 32 gezogen werden, wodurch das Anbauteil 14 gegen die Profilschiene 16 geklemmt wird.

Wie in den Figuren 1 und 2 zu sehen ist, sind des Weiteren auf der der Gewindeplatte 32 zugewandten Unterseite der Deckplatte 30 in Richtung zur Gewindeplatte 32 vorstehende Anschläge 76 vorgesehen, die in die Öffnung 28 eintauchen und die Deckplatte 30 und somit die Befestigungsvorrichtung 10 drehstarr am Anbauteil 14 fixieren können. Die Deckplatte 30 kann beispielsweise während des Drehens der Gewindestange 38 gegen das Anbauteil 14 gedrückt werden, so dass sich die Deckplatte 30 sowie die über die Haltevorrichtung 34 drehstarr mit der Deckplatte 30 verbundene Gewindeplatte 32 nicht mit der Gewindestange 38 mitdrehen können.

Durch die Führungsausnehmungen 58 bzw. die Führungsvorsprünge 62 kann also die Haltevorrichtung 34 mit der darin drehstarr gehaltenen Gewindeplatte 32 drehstarr und in Längsrichtung verschieblich an der Deckplatte gehalten werden. Durch den Halteflansch 52, der gegen die Gewindeplatte 32 vorgespannt ist, kann zudem eine Vorfixieren der Befestigungsvorrichtung 10 und somit des Anbauteils an der Profilschiene 16 erfolgen, die die Montage der Befestigungsbaugruppe 12 erleichtert.

Da der Halteflansch 52 in die Vertiefung 72 eintaucht, befindet sich der Halteflansch 52 nicht im Kraftfluss zwischen der Deckplatte 30, dem Anbauteil 14, der Profilschiene 16 und der Gewindeplatte 32. Somit ist die Stabilität der Fixierung allein von der Deckplatte 30, dem Anbauteil 14, der Profilschiene 16 und der Gewindeplatte 32 bzw. dem Material, aus dem diese jeweils hergestellt sind, abhängig. Beispielsweise sind diese aus Metall oder einen Material oder einer Materialkombination mit ähnlicher Festigkeit hergestellt. Da die Haltevorrichtung 34 lediglich während der Montage zur Positionierung der Gewindeplatte 32 benötigt wird, kann diese aus einem leichteren Material hergestellt sein, beispielsweise aus einem Kunststoff.

Zum Lösen des Anbauteils 14 von der Profilschiene 16 kann die Verspannung zwischen der Deckplatte 30 und der Gewindeplatte 32 durch Drehen der Gewindestange 38 in entgegengesetzter Richtung gelöst werden. Anschließen kann die Gewindeplatte 32 durch Drehen entgegen der Eindrehrichtung so ausgerichtet werden, dass diese aus dem Längsschlitz 18 und optional auch aus der Öffnung 28 entnommen werden kann. Das Ausdrehen der Drehanschläge 54 aus der Öffnung 28 erfolgt durch die Ausdrehschrägen 58, die beim Drehen entgegen der Eindrehrichtung mit dem Rand der Öffnung 28 in Anlage gelangen und bei einem weiteren Drehen den Halteflansch 52 von der Vorderseite des Anbauteils 14 weg und somit die Drehanschläge 54 aus der Öffnung 28 drängen.

Die Erfindung ist nicht auf eine der vorbeschriebenen Ausführungsformen beschränkt, sondern in vielfältiger Weise abwandelbar.

Beispielsweise kann die Anzahl und Verteilung der Führungsvorsprünge 62 sowie der Führungsausnehmungen 58 variiert werden. Ebenso kann die Aufnahme 46 für die Gewindeplatte 32 beliebig ausgebildet sein. Es ist lediglich erforderlich, dass die Gewindeplatte 32 drehstarr und in Längsrichtung L beweglich gelagert ist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Befestigungsvorrichtung
- 12: Befestigungsbaugruppe
- 14: Anbauteil
- 16: Profilschiene
- 18: Längsschlitz
- 20: Schlitzflanken des Längsschlitzes
- 22: Aufnahmeraum der Profilschiene
- 24: Auflageplatte
- 26: Vorderseite
- 28: Öffnung
- 30: Deckplatte
- 32: Gewindeplatte
- 34: Haltevorrichtung
- 36: Feder
- 38: Gewindestange
- 40: Kopf der Gewindestange
- 42: Außengewinde
- 44: Innengewinde
- 45: Bohrung der Gewindeplatte

- 46: Aufnahme
- 48: Ende der Haltevorrichtung
- 49: Anschlag
- 50: Ende der Haltevorrichtung
- 52: Halteflansch
- 54: Drehanschlag
- 56: Ausdrehschräge
- 58: Führungsausnehmung
- 60: Schlitz
- 62: Führungsvorsprung
- 64: Halteabschnitt
- 66: Boden
- 68: Ende der Feder
- 70: Ende der Feder
- 72: Vertiefung
- 74: Anschlag

- L: Längsrichtung

## Patentansprüche

1. Befestigungsvorrichtung (10) zur Befestigung eines Anbauteils (14) an einer Profilschiene (16) mit einem im Wesentlichen C-förmigen Querschnitt und einem Längsschlitz (18), wobei die Befestigungsvorrichtung (10) eine Deckplatte (30), eine Gewindeplatte (32) mit einer Gewindebohrung (45) zum Verankern der Befestigungsvorrichtung (10) in der Profilschiene (16), eine Haltevorrichtung (34)mit einer Aufnahme (46) für die Gewindeplatte (32) und mit einem radial abstehenden Halteflansch (52) zur Abstützung an dem Anbauteil (14) aufweist, wobei die Haltevorrichtung (34) drehstarr mit der Deckplatte (30) und der Gewindeplatte (32) gekoppelt ist, eine zwischen der Deckplatte (30) und der Haltevorrichtung (34) angeordnete Feder (36) und eine Gewindestange (38) aufweist, die mit einem Außengewinde (42) in die Gewindebohrung (45) eingreift und sich an der Deckplatte (30) abstützt, **dadurch gekennzeichnet, dass** an der Deckplatte (30) in Richtung zur Gewindeplatte (32) vorstehende Führungsvorsprünge (62) vorgesehen sind, die in korrespondierende Führungsausnehmungen (58) in der Haltevorrichtung (34) drehstarr und axial verschieblich eingreifen und, dass sich die Feder (36) unmittelbar an der Deckplatte (30) abstützt.

2. Befestigungsvorrichtung nach Anspruch 1, **dadurch gekennzeichnet, dass** die Haltevorrichtung (34) einen zylinderförmigen, sich im Wesentlichen in Längsrichtung (L) der Gewindestange (38) erstreckenden Halteabschnitt (64) aufweist, und die Führungsausnehmungen (58) im Halteabschnitt (64) vorgesehen sind.

3. Befestigungsvorrichtung nach Anspruch 2, **dadurch gekennzeichnet, dass** die Führungsausnehmungen (58) durch einen im Wesentlichen in Längsrichtung (L) der Gewindestange (38) verlaufenden Schlitz (60) im Halteabschnitt (64) gebildet sind.

4. Befestigungsvorrichtung nach einem der Ansprüche 2 und 3, **dadurch gekennzeichnet, dass** die Feder (36) innerhalb des Halteabschnitts (64) angeordnet ist.

5. Befestigungsvorrichtung nach einem der Ansprüche 2 bis 4, **dadurch gekennzeichnet, dass** die Feder (38) an den Führungsvorsprüngen (62) an der Deckplatte (30) anliegt.

6. Befestigungsvorrichtung nach einem der vorhergehenden Ansprüche, **dadurch gekennzeichnet, dass** der Halteflansch (52) einen Drehanschlag (54) zur Anlage am Rand einer Öffnung (28) des Anbauteils (14) sowie eine Ausdrehschräge (56) zum Ausdrehen des Drehanschlages (54) aus der Öffnung (28) des Anbauteils (14) aufweist.

7. Befestigungsvorrichtung nach einem der vorhergehenden Ansprüche, **dadurch gekennzeichnet, dass** die Deckplatte (30) eine Vertiefung (72) aufweist, in der der Halteflansch (52) so aufgenommen werden kann, dass dieser nicht über die der Gewindeplatte (32) zugewandten Unterseite der Deckplatte (30) vorsteht.

8. Befestigungsvorrichtung nach einem der vorhergehenden Ansprüche, **dadurch gekennzeichnet, dass** an der Deckplatte (30) zumindest ein in Richtung zur Gewindeplatte (32) vorstehender Anschlag (74) zur drehfesten Lagerung der Deckplatte (30) an der Öffnung (28) des Anbauteils (14) vorgesehen ist.

9. Befestigungsvorrichtung nach einem der vorhergehenden Ansprüche, **dadurch gekennzeichnet, dass** mehrere Führungsvorsprünge (62) und mehrere korrespondierende Führungsausnehmungen (58) vorgesehen sind, die um die Gewindestange (38) verteilt, insbesondere gleichmäßig verteilt, angeordnet sind.

10. Befestigungsvorrichtung nach einem der vorhergehenden Ansprüche, **dadurch gekennzeichnet, dass** am der Deckplatte (30) entgegengesetzten Ende (48) der Haltevorrichtung (34) ein Halteschlitz für die Gewindeplatte (32) vorgesehen ist.

11. Befestigungsvorrichtung nach einem der vorhergehenden Ansprüche, **dadurch gekennzeichnet, dass** die Aufnahme (46) für die Gewindeplatte (32) einen Anschlag (49) für die Gewindeplatte (32) aufweist, der den minimalen Abstand zwischen der Gewindeplatte (32) und dem Halteflansch (52) festlegt.

12. Befestigungsbaugruppe (12) mit einer Befestigungsvorrichtung (10) nach einem der vorhergehenden Ansprüche und mit einem Anbauteil (14), das eine Öffnung (28) aufweist, durch die sich die Haltevorrichtung (34) erstreckt, wobei der Halteflansch (52) der Haltevorrichtung (34) auf dem Anbauteil (34) aufliegt und das Anbauteil (14) zur Auflage auf der Profilschiene (16) seitlich neben dem Längsschlitz (18) bestimmt ist.

13. Befestigungsbaugruppe nach Anspruch 12, **dadurch gekennzeichnet, dass** an dem Halteflansch (52) ein Drehanschlag (54) zum Eingriff in die Öffnung (28) des Anbauteils (14) sowie eine Ausdrehschräge (56) zum Ausdrehen des Drehanschlages (54) aus der Öffnung (28) des Anbauteils (14) vorgesehen sind.

## Claims

1. Fastening device (10) for fastening an additional component (14) to a profile rail (16) having a substantially C-shaped cross-section and a longitudinal slot (18), wherein the fastening device (10) has a cover plate (30), a threaded plate (32) having a threaded bore (45) for anchoring the fastening device (10) in the profile rail (16), a holding device (34) with a receptacle (46) for the threaded plate (32) and with a radially projecting holding flange (52) for support on the additional component (14), wherein the holding device (34) is coupled in a torsionally rigid manner to the cover plate (30) and the threaded plate (32), has a spring (36) arranged between the cover plate (30) and the holding device (34) and a threaded rod (38) which engages with an outer thread (42) in the threaded bore (45) and is supported on the cover plate (30), **characterised in that** on the cover plate (30) are provided guiding projections (62) which project in the direction of the threaded plate (32), which engage in a torsionally rigid and axially displaceable manner in corresponding guiding recesses (58) in the holding device (34), and that the spring (36) is supported directly on the cover plate (30).

2. Fastening device according to claim 1, **characterised in that** the holding device (34) has a cylindrical holding portion (64) which extends substantially in longitudinal direction (L) of the threaded rod (38), and the guiding recesses (58) are provided in the holding portion (64).

3. Fastening device according to claim 2, **characterised in that** the guiding recesses (58) are formed by a slot (60) in the holding portion (64) which extends substantially in longitudinal direction (L) of the threaded rod (38).

4. Fastening device according to any of claims 2 and 3, **characterised in that** the spring (36) is arranged within the holding portion (64).

5. Fastening device according to any of claims 2 to 4, **characterised in that** the spring (38) rests on the guiding projections (62) on the cover plate (30).

6. Fastening device according to any of the preceding claims, **characterised in that** the holding flange (52) has a rotary stop (54) for resting on the edge of an opening (28) of the additional component (14) as well as an unscrewing slope (56) for unscrewing the rotary stop (54) out of the opening (28) of the additional component (14).

7. Fastening device according to any of the preceding claims, **characterised in that** the cover plate (30) has an indentation (72) in which the holding flange (52) can be received such that it does not protrude above the lower side of the cover plate (30) which faces the threaded plate (32).

8. Fastening device according to any of the preceding claims, **characterised in that** on the cover plate (30) is provided at least one stop (74) which protrudes in the direction of the threaded plate (32) for the non-rotational support of the cover plate (30) on the opening (28) of the additional component (14).

9. Fastening device according to any of the preceding claims, **characterised in that** several guiding projections (62) and several corresponding guiding recesses (58) are provided which are arranged distributed, particularly evenly distributed, about the threaded rod (38).

10. Fastening device according to any of the preceding claims, **characterised in that** on the end (48) of the holding device (34) opposite to the cover plate (30) is provided a holding slot for the threaded plate (32).

11. Fastening device according to any of the preceding claims, **characterised in that** the receptacle (46) for the threaded plate (32) has a stop (49) for the threaded plate (32) which determines the minimum distance between the threaded plate (32) and the holding flange (52).

12. Fastening assembly (12) having a fastening device (10) according to any of the preceding claims and having an additional component (14) which has an opening (28) through which the holding device (34) extends, wherein the holding flange (52) of the holding device (34) rests on the additional component (34) and the additional component (14) is intended for resting on the profile rail (16) laterally next to the longitudinal slot (18).

13. Fastening assembly according to claim 12, **characterised in that** on the holding flange (52) is provided a rotary stop (54) for engaging into the opening (28) of the additional component (14) as well as an unscrewing slope (56) for unscrewing the rotary stop (54) out of the opening (28) of the additional component (14).

## Revendications

1. Dispositif de fixation (10) pour la fixation d'une pièce rapportée (14) à un rail profilé (16) avec une section transversale sensiblement en forme de C et une fente longitudinale (18), dans lequel le dispositif de fixation (10) présente une plaque de recouvrement (30), une plaque filetée (32) avec un perçage fileté (45) pour l'ancrage du dispositif de fixation (10) dans le rail profilé (16), un dispositif de retenue (34) avec un logement (46) pour la plaque filetée (32) et avec une bride de retenue (52) dépassant radialement pour l'appui contre la pièce rapportée (14), dans lequel le dispositif de retenue (34) est couplé de manière rigide en rotation à la plaque de recouvrement (30) et la plaque filetée (32), un ressort (36) agencé entre la plaque de recouvrement (30) et le dispositif de retenue (34) et une tige filetée (38) qui s'engage avec un filet extérieur (42) dans le perçage fileté (45) et s'appuie contre la plaque de recouvrement (30), **caractérisé en ce qu'** au niveau de la plaque de recouvrement (30), des saillies de guidage (62) dépassant en direction de la plaque filetée (32) sont prévues, lesquelles s'engagent de manière rigide en rotation et axialement mobile dans des évidements de guidage (58) correspondants dans le dispositif de retenue (34) et, que le ressort (36) s'appuie directement contre la plaque de recouvrement (30).

2. Dispositif de fixation selon la revendication 1, **caractérisé en ce que** le dispositif de retenue (34) présente une section de retenue (64) cylindrique, s'étendant sensiblement dans le sens longitudinal (L) de la tige filetée (38), et les évidements de guidage (58) sont prévus dans la section de retenue (64).

3. Dispositif de fixation selon la revendication 2, **caractérisé en ce que**les évidements de guidage (58) sont formés par une fente (60) s'étendant sensiblement dans le sens longitudinal (L) de la tige filetée (38) dans la section de retenue (64).

4. Dispositif de fixation selon l'une quelconque des revendications 2 et 3, **caractérisé en ce que** le ressort (36) est agencé à l'intérieur de la section de retenue (64).

5. Dispositif de fixation selon l'une quelconque des revendications 2 à 4, **caractérisé en ce que** le ressort (38) repose contre les saillies de guidage (62) sur la plaque de recouvrement (30).

6. Dispositif de fixation selon l'une quelconque des revendications précédentes, **caractérisé en ce que** la bride de retenue (52) présente une butée rotative (54) pour l'appui contre le bord d'une ouverture (28) de la pièce rapportée (14) ainsi qu'un biais de dévissage (56) pour le dévissage de la butée rotative (54) de l'ouverture (28) de la pièce rapportée (14).

7. Dispositif de fixation selon l'une quelconque des revendications précédentes, **caractérisé en ce que** la plaque de recouvrement (30) présente une cavité (72), dans laquelle la bride de retenue (52) peut être reçue de sorte que celle-ci ne dépasse pas du côté inférieur tourné vers la plaque filetée (32) de la plaque de recouvrement (30).

8. Dispositif de fixation selon l'une quelconque des revendications précédentes, **caractérisé en ce qu'**au niveau de la plaque de recouvrement (30) au moins une butée (74) dépassant en direction de la plaque filetée (32) est prévue pour le logement résistant à la rotation de la plaque de recouvrement (30) au niveau de l'ouverture (28) de la pièce rapportée (14).

9. Dispositif de fixation selon l'une quelconque des revendications précédentes, **caractérisé en ce que** plusieurs saillies de guidage (62) et plusieurs évidements de guidage (58) correspondants sont prévus, lesquels sont agencés répartis autour de la tige filetée (38), en particulier répartis uniformément.

10. Dispositif de fixation selon l'une quelconque des revendications précédentes, **caractérisé en ce qu'**au niveau de l'extrémité (48) opposée à la plaque de recouvrement (30) du dispositif de retenue (34), une fente de retenue pour la plaque filetée (32) est prévue.

11. Dispositif de fixation selon l'une quelconque des revendications précédentes, **caractérisé en ce que** le logement (46) pour la plaque filetée (32) présente une butée (49) pour la plaque filetée (32) qui fixe la distance minimale entre la plaque filetée (32) et la bride de retenue (52).

12. Ensemble de fixation (12) avec un dispositif de fixation (10) selon l'une quelconque des revendications précédentes et avec une pièce rapportée (14) qui présente une ouverture (28), par laquelle le dispositif de retenue (34) s'étend, dans lequel la bride de retenue (52) du dispositif de retenue (34) repose sur la pièce rapportée (14) et la pièce rapportée (14) est destinée à l'appui sur le rail profilé (16) latéralement à côté de la fente longitudinale (18).

13. Ensemble de fixation selon la revendication 12, **caractérisé en ce qu'**au niveau de la bride de retenue (52) une butée rotative (54) est prévue pour la mise en prise dans l'ouverture (28) de la pièce rapportée (14) ainsi qu'un biais de desserrage (56) pour le desserrage de la butée rotative (54) de l'ouverture (28) de la pièce rapportée (14).
